# EUROPEAN PATENT SPECIFICATION

(11) **EP 2 053 508 B1**
(45) Date of publication and mention of the grant of the patent: **10.01.2018**
(21) Application number: 07790344.1
(22) Date of filing: 09.08.2007
(51) Int. Cl.: G06F 9/50

(54) **INFORMATION PROCESSING SYSTEM, INFORMATION PROCESSING DEVICE AND INFORMATION PROCESSING METHOD**
SYSTEM, EINRICHTUNG UND VERFAHREN ZUR INFORMATIONSVERARBEITUNG
SYSTÈME DE TRAITEMENT D'INFORMATIONS, DISPOSITIF DE TRAITEMENT D'INFORMATIONS ET PROCÉDÉ DE TRAITEMENT D'INFORMATIONS

(30) Priority: 14.11.2006 JP 2006307882
(43) Date of publication of application: 29.04.2009
(73) Proprietor: Sony Interactive Entertainment Inc., Tokyo 108-0075 (JP)
(72) Inventor: TSUTSUI, Kyoya, Minato-ku Tokyo 107-0062 (JP)
(74) Representative: Müller Hoffmann & Partner
(86) International application number: PCT/JP2007/000856
(87) International publication number: WO 2008/059610

(56) References cited:
- EP-A2- 1 047 240
- WO-A1-2006/029656
- JP-A- 2000 090 038
- JP-A- 2001 166 956
- JP-A- 2003 108 537
- JP-A- 2004 302 741

## Description

### FIELD OF THE INVENTION

The present invention relates to an information processing (IP) technology, in particular, to an IP system realized by a plurality of apparatus connected via a network, and an IP apparatus and method used therein.

### DESCRIPTION OF THE RELATED ART

Due to the recent developments of LSI manufacturing technologies and IP technologies, information processing apparatuses (hereinafter, referred to as "IP apparatuses") have been developed meeting the needs for both miniaturization and higher performance. As a result, various small-sized IP apparatuses, such as thin type Personal Computers (PCs), portable terminals, portable game devices, and portable audio players, have been widely used. Moreover, network environments surrounding these IP apparatuses have been more complete, thereby various services can be readily enjoyed through IP apparatuses at hand by accessing servers EP1047240 discloses a method and system for a collaborative data network, which has attached computing nodes, including object requestor nodes, object source nodes, and intermediate nodes which may be proxy servers. The method can allow each participating proxy server to adapt to the dynamic load conditions of itself as well as proxies, as well as to dynamic traffic conditions in the data network.

WO 2006/029656 discloses a computer arrangement for providing services for clients over a network. The architecture described is strongly based on a server/client structure and thus autonomy of any client cannot be fully achieved.

### DISCLOSURE OF THE INVENTION

### PLOBLEMS TOE BE SOLVED BY THE INVENTION

Hardware and software technologies surrounding computers have been steadily advancing. Many users of the computers desire to make their IP apparatuses or software state-of-the-art at all times; however, it is difficult to realize their desires in terms of costs or the like. At present, many functions are being implemented in small IP apparatuses, such as portable terminals; however, their resources, such as computing capacities or storage capacities are still limited in comparison with large IP apparatuses having, for example, many processors or high-capacity hard disks. Therefore, there are naturally increasing needs for having small-sized IP apparatuses with the same performance as that of large-sized ones.

The present invention has been made in view of these circumstances, and a general purpose of the invention is to provide a technology in which a result of more advanced information processing can be readily obtained by operating an IP apparatus at hand.

### MEANS FOR SOLVING THE PROBLEMS

An embodiment of the present invention relates to an IP system. The IP system comprising: an IP apparatus to request proxy computing, which is operated by a user and makes another IP apparatus connected thereto via a network execute proxy computing for the user, and receives a result of the proxy computing from the another IP apparatus to utilize it; and an IP apparatus to be requested to execute proxy computing that executes the proxy computing for the user by providing its computing resource, and transmits a result of the proxy computing to the IP apparatus to request proxy computing, wherein the IP apparatus to be requested to execute proxy computing comprises: a halt request unit that transmits a signal for requesting a halt to the proxy computing, to the IP apparatus to request proxy computing, when the IP apparatus to be requested to execute proxy computing is in a state of being unable to continue to execute the proxy computing for the user while executing it; and a proxy computing halt unit that halts execution of the proxy computing, when receiving a signal indicating that another IP apparatus to be requested to execute proxy computing, different from the said IP apparatus to be requested to execute proxy computing, becomes capable of executing the proxy computing for the user.

Another embodiment of the present invention also relates to an IP system. The IP system comprising: an IP apparatus to request proxy computing which is operated by a user and makes another IP apparatus connected thereto via a network, execute proxy computing for the user, and receives a result of the proxy computing from the another IP apparatus to utilize it; a software providing IP apparatus that provides software held by itself to another IP apparatus via a network; and an IP apparatus to be requested to execute proxy computing that executes proxy computing for the user by providing its computing resource, and transmits a result of the proxy computing to the IP apparatus to request proxy computing, wherein the IP apparatus to request proxy computing comprises a request signal transmitter that not only transmits a signal for requesting provision of software necessary for the proxy computing to the software providing IP apparatus, but also transmits a signal for requesting execution of proxy computing to the IP apparatus to be requested to execute proxy computing, and wherein the software providing IP apparatus comprises a software transmitter that transmits the necessary software to the IP apparatus to be requested to execute proxy computing, in accordance with the signal for requesting provision of the software, and wherein the IP apparatus to be requested to execute proxy computing comprises an information processor that reads the necessary software transmitted by the software providing IP apparatus into its memory and activates the software to execute the proxy computing requested, in accordance with the signal for requesting execution of proxy computing.

Still another embodiment of the present invention relates to an IP apparatus. The IP apparatus comprises: a communication unit that receives a permission from a user for executing proxy computing for a person who operates another IP apparatus connected thereto via a network, by providing its computing resource to the another IP apparatus, and transmits a signal for requesting registration that the proxy computing can be executed, to a server; and an information processor that executes the proxy computing, in accordance with a signal for requesting execution of the proxy computing, which is transmitted by the another IP apparatus after the registration. It is characterized in that the communication unit acquires the information directed to another IP apparatus capable of executing proxy computing registered in the server, when being in a situation where the proxy computing cannot be executed continuously while being executed in the information processor, and transmits the intermediate data of the proxy computing to the another IP apparatus; and the information processor halts the proxy computing, when receiving a switching permission signal indicating the another IP apparatus becomes capable of continuing to execute the proxy computing, as a result of transmitting the intermediate data by the communication unit.

Still another embodiment of the present invention relates to an IP apparatus. The IP apparatus is characterized in that the apparatus transmits the software held by itself to an IP apparatus, which is designated to execute proxy computing of the software by the another IP apparatus, in accordance with a signal for requesting transmitting of the software, transmitted by the another IP apparatus.

Still another embodiment of the present invention relates to an IP method. The IP method is a method in which an IP apparatus operated by a user makes another IP apparatus connected thereto via a network, execute proxy computing for the user, and receives a result of the proxy computing from the another IP apparatus to utilize it, the method comprising: acquiring the address of a first IP apparatus to be requested to execute proxy computing, selected from a list of IP apparatuses capable of executing proxy computing, stored in a server connected to the network; transmitting a signal for requesting the first IP apparatus to be requested to execute proxy computing, to execute proxy computing, based on the acquired address; receiving a result of the proxy computing from the first IP apparatus to be requested to execute proxy computing; acquiring the address of a second IP apparatus to be required proxy computing, selected from the list of IP apparatuses capable of executing proxy computing, when receiving a signal for requesting a halt to execution of the proxy computing, from the first IP apparatus to be requested to execute proxy computing; transmitting a signal for requesting the second IP apparatus to be requested to execute proxy computing, to execute the proxy computing based on the acquired address; receiving a signal indicating that the second IP apparatus to be requested to execute proxy computing is ready to continue to execute the proxy computing; and switching sources of a result of the proxy computing from the first IP apparatus to be requested to execute proxy computing, to the second IP apparatus to be requested to execute proxy computing.

Any combination of the aforementioned components or any manifestation of the present invention realized by modification of a method, device, system, and computer program and so forth, is effective as an embodiment of the present invention.

### EFFECT OF THE INVENTION

According to the present invention, an output result of information processing performed with a higher performance than that of the IP apparatus in operation, can be readily acquired.

### BRIEF DESCRIPTION OF THE DRAWINGS

Fig. 1 is a block diagram illustrating a whole structure of an IP system in the present embodiment;
Fig. 2 is a block diagram illustrating the structures of a portable terminal, a server, a software providing PC, and a computing capacity providing PC in the present embodiment;
Fig. 3 is a diagram illustrating the structure of a managing device in the present embodiment;
Fig. 4 is a diagram illustrating an example of the structure of an available PC table stored in a table storage of a server in the present embodiment;
Fig. 5 is a flowchart illustrating whole processing procedures performed by the IP system in the present embodiment;
Fig. 6 is a flowchart illustrating procedures for deciding a PC to be requested to perform processing in the present embodiment;
Fig. 7 is a flowchart illustrating processing procedures for switching between normal processing and proxy computing in the computing capacity providing PC in the present embodiment;
Fig. 8 is a flowchart illustrating in detail processing procedures performed by the computing capacity providing PC and the portable terminal, including the case of switching PCs performing proxy computing in the present embodiment;
Fig. 9 is a flowchart illustrating processing procedures directed to billing and mutual authentication during execution of proxy computing in the present embodiment; and
Fig. 10 is a block diagram illustrating the structure of the IP system including a portable game device and the computing capacity providing PC.

### DESCRIPTION OF THE REFERENCE NUMERALS

10a ... PORTABLE TERMINAL, 12 ... SERVER, 14 ... SOFTWARE PROVIDING PC, 16a ... COMPUTING CAPACITY PROVIDING PC, 18 ... MANAGING DEVICE, 20 ... INPUT UNIT, 22 ... COMMUNICATION UNIT, 24 ... OUTPUT UNIT, 26 ... TABLE STORAGE, 28 ... COMMUNICATION UNIT, 30 ... INFORMATION PROCESSOR, 31 ... INPUT UNIT, 32 ... COMMUNICATION UNIT, 40 ... SOFTWARE STORAGE, 42 ... COMMUNICATION UNIT, 50 ... CONTROLLER, 52 ... BALANCE STORAGE, 54 ... SECRET KEY STORAGE, 56 ... RANDOM NUMBER GENERATOR, 58 ... TIMER, 100 ... INFORMATION PROCESSING SYSTEM, 110 ... PORTABLE GAME DEVICE, 116 ... COMPUTING CAPACITY PROVIDING PC, 160 ... DECODING UNIT, 162 ... ENCODING UNIT, 200 ... INFORMATION PROCESSING SYSTEM, 300 ... AVAILABLE PC TABLE.

### BEST MODE FOR CARRYING OUT THE INVENTION

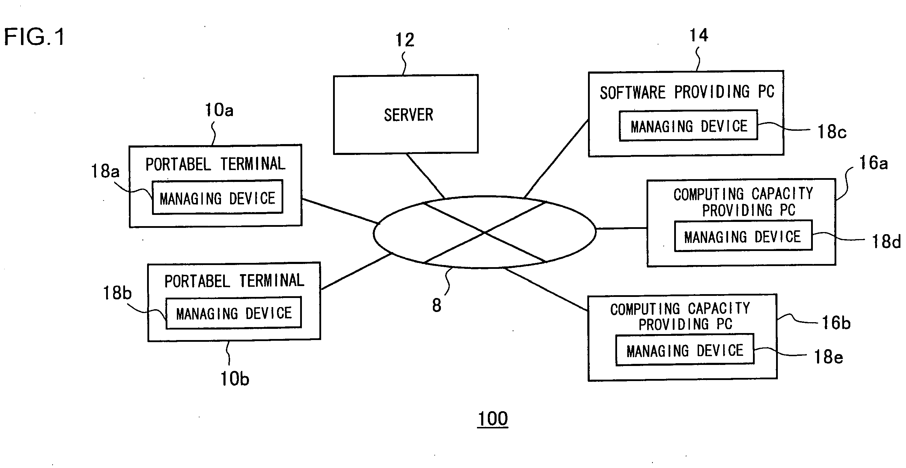

Fig. 1 illustrates the whole structure of the information processing (IP) system in the present embodiment. The IP system 100 has a structure in which the portable terminals 10a and 10b, the server 12, the software providing PC 14, and the computing capacity providing PCs 16a and 16b are connected to a network 8, respectively. The numbers of the portable terminals and the computing capacity providing PCs are not limited to two, respectively, in the present embodiment; however, they are represented by the portable terminals 10a and 10b, and the computing capacity providing PCs 16a and 16b, respectively, in the drawing.

The portable terminals 10a and 10b may be normal computers without being limited to portable terminals. The software providing PC 14 and the computing capacity providing PCs 16a and 16b may be any IP apparatus, such as high-performance game device, middle-sized computer, and large-sized computer, which can realize the present embodiment described below, without being limited to PCs.

In the present embodiment, at least either of the computing capacity providing PC 16a or 16b executes proxy computing of the processing desired by a user who operates a portable terminal 10a. Despite operating the portable terminal 10a, the user can enjoy an IP result exceeding the range possible with the resource provided in the portable terminal 10a, by receiving and outputting the output data obtained as a result of the proxy computing, on the portable terminal 10a side.

For example, high-speed and high-resolution motion images, which are impossible to be obtained by the resource of the portable terminal 10a, can be displayed on the terminal 10a, by making the computing capacity providing PC 16a execute proxy computing of the computing processing of a game. Alternatively, assuming that the portable terminal 10a is an audio reproduce unit, the application software not installed in the terminal 10a, such as application for audio codec conversion, is activated in the computing capacity providing PC 16a to make the PC 16a perform the codec conversion, thereby allowing the terminal 10a to obtain only the output data thereof and play it back.

When the computing capacity providing PC 16a executing proxy computing is not installed with the software by which the proxy computing is executed, the proxy computing can be realized by transmitting the software from the software providing PC 14 storing the software, to the PC 16a. A user of the portable terminal 10a who requests executing proxy computing, will pay for providing computing capacity and software, to the owners of the computing capacity providing PC 16a and the software providing PC 14, in the form of electronic money.

The computing capacity providing PCs 16a and 16b are, for example, PCs or the like that are connected to the network 8 and not currently being used by their owners. That is, PCs usually used for normal processing are to be made the computing capacity providing PCs 16a and 16b when they are not being used by their owners. When the owner of the computing capacity providing PC 16a desires to start normal processing while the PC 16a is executing proxy computing in accordance with a request by the portable terminal 10a, the proxy computing will be switched so as to be executed by another computing capacity providing PC 16b. The "normal processing" used herein means the processing that is performed by the owner with his/her direct operation of the computing capacity providing PC 16a, etc.

Therefore, although the portable terminals 10a and 10b, the computing capacity providing PCs 16a and 16b, and the software providing PC 14 are illustrated separately in accordance with their roles in Fig. 1, an IP apparatus can actually be any one of the portable terminal 10a, the software providing PC 14, or the computing capacity providing PC 16a; or can be eliminated from the IP system 100 in order to execute normal processing.

The portable terminals 10a and 10b, the software providing PC 14, and the computing capacity providing PCs 16a and 16b are provided with the managing devices 18a, 18b, 18c, 18d and 18e, respectively. In the following description, the managing devices are sometimes referred to as the managing device 18, collectively. The managing device 18 is a device that mainly performs the processing directed to procedures necessary for proxy computing, such as mutual authentication among the portable terminals 10a and 10b, the software providing PC 14 and the computing capacity providing PCs 16a and 16b, billing management, and encryption and decoding of data and software to be transmitted.

Accordingly, only the portable terminals 10a and 10b, the software providing PC 14, and the computing capacity providing PCs 16a and 16b respectively provided with the managing device 18 can be included in the IP system 100. The managing device 18 may be in any form, such as an external device that can be connected to the portable terminals 10a and 10b, the software providing PC 14, and the computing capacity providing PCs 16a and 16b; a card that can be inserted into a slot provided in the bodies of the above apparatuses; and a circuit implemented in the bodies of the above apparatuses. Alternatively, the managing device 18 may be implemented by the cooperation between an external device and the software activated within the above apparatuses.

The server 12 stores an available PC table in which a list of addresses of the software providing PC 14 or the computing capacity providing PCs 16a and 16b that are available at present, is described. The portable terminal 10a to request proxy computing, at first makes a request for proxy computing to be executed, to the server 12. The server 12 selects a PC available as the software providing PC 14 or the computing capacity providing PC 16a or the like, from the available PC table, and returns the address of the selected PC to the portable terminal 10a. With this, the portable terminal 10a can appropriately make a request for processing, to the software providing PC 14 or the computing capacity providing PC 16a or the like. Therefore, the addresses to be stored in the available PC table are effective ones in the network 8, based on which a signal for requesting can be transmitted.

The available PC table may be constituted as a bulletin board that can be referred to by the portable terminals 10a and 10b. In this case, the portable terminal 10a or the like may decide a PC to be requested, by referring to the bulletin board by itself. In either case, the available PC table is updated with intentions of owners of the software providing PC 14 or the computing capacity providing PC 16a or the like, being reflected.

The owner of the computing capacity providing PC 16a reflects his/her intention of providing its computing capacity in the available PC table, by making a predetermined instruction input in the PC 16a when, for example, completing normal processing by direct operations of the PC. The owner of the software providing PC 14 registers in the available PC table by making a predetermined instruction input in the software providing PC 14, at an appropriate time when he/she desires to provide the software, for example, regardless of whether the software providing PC 14 is in use or not. Therefore, the available PC table may include two types of lists, a list of PCs capable of providing the computing capacity and a list of PCs capable of providing the software.

The aforementioned situation is intended to be solely an example, and in the present embodiment, the software providing PC 14 and the computing capacity providing PCs 16a and 16b only have to be registered appropriately in the available PC table, when software and computing capacity can be provided. For example, the server 12 may manage the availability and unavailability of PCs. Hereinafter, description will be made, taking an example of registration by the user mentioned above.

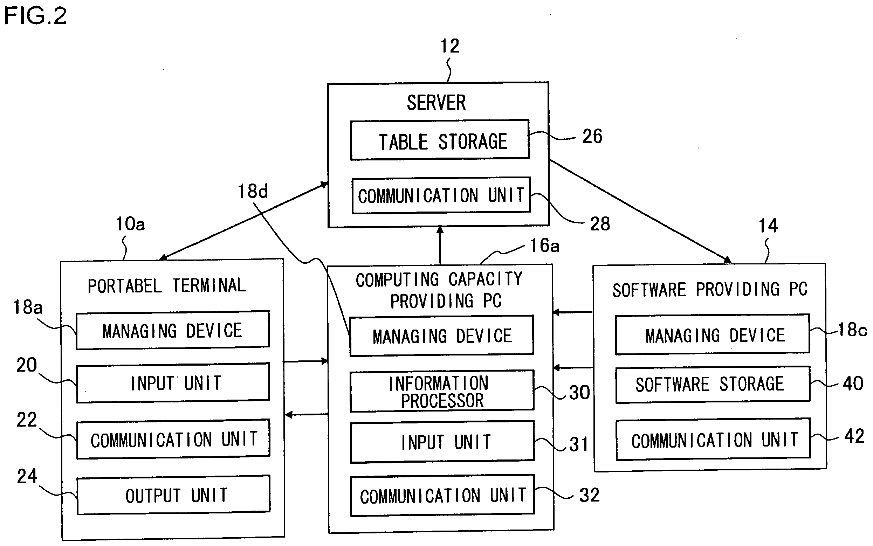

Fig. 2 illustrates in detail the structures of the portable terminal 10a, the server 12, the software providing PC 14, and the computing capacity providing PC 16a. In Fig. 2, each element described as a functional block performing various processing, can be constituted by a CPU, a memory, and other LSIs in terms of hardware; and can be implemented by a program or the like that realizes communication with another apparatus via a network in terms of software. Therefore, it can be understood by a person skilled in the art that these functional blocks can be implemented in various forms by hardware, software, or combinations thereof, which should not be limited to any form.

The managing devices 18a, 18c, and 18d included in the portable terminal 10a, the software providing PC 14, and the computing capacity providing PC 16a, generally have the above functions, which will be described in detail later. The portable terminal 10a includes an input unit 20, a communication unit 22, and an output unit 24, in addition to the managing device 18a. The input unit 20 receives an instruction input for making a request for executing proxy computing of computing processing, and an instruction input directed to the progress of the proxy computing by a user operating the portable terminal 10a. Specifically, the input unit 20 includes a display apparatus that displays an input screen, and a pointing device for selecting a certain area displayed on the screen, or the like.

The communication unit 22 communicates with the server 12 to select a apparatus to be requested that executes the proxy computing designated by a user in the input unit 20. In addition, the communication unit 22 transmits a signal for requesting processing to the computing capacity providing PC 16a and the software providing PC 14a, and also acquires a result of the proxy computing from the computing capacity providing PC 16a. The output unit 24 outputs the result of the proxy computing executed by the computing capacity providing PC 16a. The output unit 24 differs in its aspects in accordance with a content of proxy computing. For example, the output units are a display apparatus and a speaker in the case of executing proxy computing of a game, and a speaker and a storage device in the case of executing proxy computing of audio codec conversion.

The server 12 includes a table storage unit 26 and a communication unit 28. The table storage unit 26 stores the available PC table. The communication unit 28 receives a signal for inquiring about a PC capable of providing software or executing proxy computing, from the portable terminal 10a, and communicates with the terminal 10a to reply. The communication unit 28 further receives a signal for registering in or eliminating the registration from the available PC table, from the software providing PC 14 or the computing capacity providing PC 16a.

The software providing PC 14 includes a software storage unit 40 and a communication unit 42 in addition to the managing device 18c. The software storage unit 40 stores the software that can be provided according to a request from the portable terminal 10a. The software storage unit 40 may be a storage unit provided in the software providing PC 14 for normal use, such as a typical hard disk, or a storage unit of which capacity is enhanced for providing various software. The communication unit 42 performs communications to register in the server 12, to receive a request for providing software from the portable terminal 10a, or to transmit the software to the computing capacity providing PC 16a.

The computing capacity providing PC 16a includes an information processor 30, an input unit 31, and a communication unit 32, as well as the managing device 18d. The information processor 30 executes the proxy computing requested by the portable terminal 10a. Specifically, the information processor 30 can be implemented by a processor that is a main body of processing and a memory that stores data, program used for processing, a processing result and the like. These elements may be modules provided in the computing capacity providing PC 16a for normal use, or modules of which processing performance is enhanced so that multiple proxy computing can be executed.

The input unit 31 receives a request from the owner of the computing capacity providing PC 16a, indicating that he/she desires to start normal processing. The input unit 31 may be a button implemented as hardware, such as a power source button, or a display unit on which a predetermined input screen is displayed and a pointing device for selecting a certain area on the input screen, or the like. The communication unit 32 performs communications to register in the server 12, to receive a request for proxy computing from the portable terminal 10a, to acquire the software transmitted from the software providing PC 14, and to transmit a processing result to the portable terminal 10a.

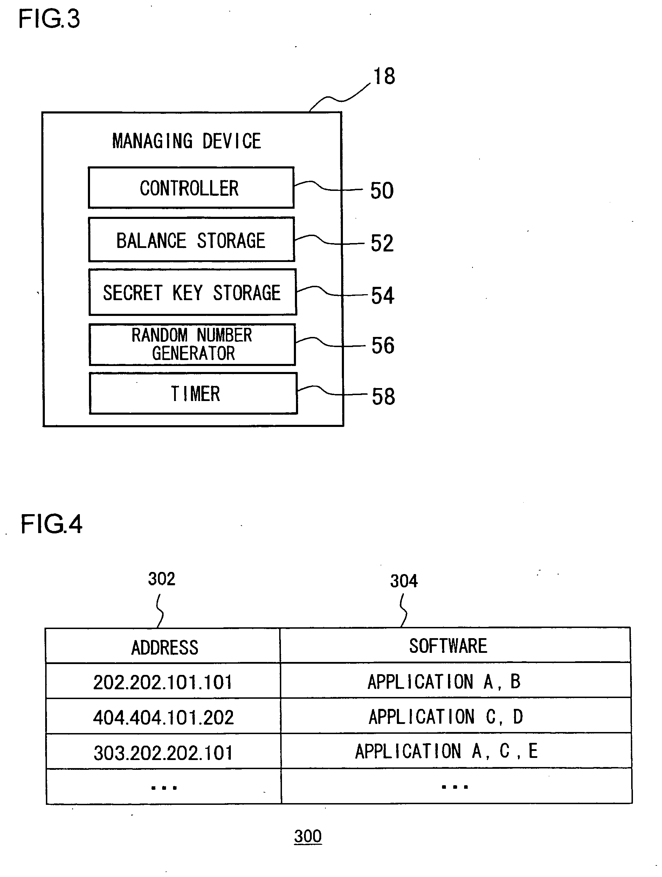

Fig. 3 illustrates the structure of the managing device 18 in detail. As an aspect of the IP system 100, in the case where the portable terminal 10a as a source of request, and the software providing PC 14 and the computing capacity providing PC 16a or the like as a destination of request, are compatible with each other, the managing device 18 may have a identical structure in any device. In a situation other than that, for example, in the case where the software providing PC 14 only provides software, the managing device 18 may be simplified as necessary.

The managing device 18 includes a controller 50, a balance storage 52, a secret key storage 54, a random number generator 56, and a timer 58. The controller 50 not only controls the whole operation of the managing device 18 but also serves as an interface between the IP apparatus connected thereto, such as the portable terminals 10a and 10b, the software providing PC 14, or the computing capacity providing PCs 16a and 16b, and the managing device 18. For example, the controller 50 performs authentication of a managing device 18 connected to a counterpart IP apparatus to/from which a signal is transmitted/received, or allows or disallows an IP apparatus connected thereto to execute processing based on the information stored in the managing device 18 of itself. Further, the controller 50 performs encrypting and decoding data to be transmitted/received.

The balance storage 52 stores a balance of the electronic money that is reduced in amount when an IP apparatus connected thereto is provided with software or computing capacity, whereas increased when providing those things. For example, assuming the managing device 18 is a card similar to a typical recording medium for electronic money, the money charged by a user using a data writing device (not illustrated) for the managing device 18, is added and stored in the balance storage 52.

The secret key storage 54 encrypts and stores the information used for authentication of the managing device 18 as a secret key. The secret key is used, for example, for confirming whether an authorized managing device 18 is connected to the computing capacity providing PC 16a, when the portable terminal 10a requests the PC 16a to execute proxy computing. The random number generator 56 generates a random number as a session key. The session key is used, for example, for confirming whether the counterpart apparatuses are authorized in the mutual authentication between the portable terminal 10a and the computing capacity providing PC 16a. The controller 50 also encrypts and decodes the session key. The timer 58 starts working following the start of execution of proxy computing to measure an elapsed time, which is used for the controller 50 to acquire a timing of billing.

Fig. 4 illustrates an example of the structure of the available PC table stored by the table storage 26 in the server 12. The available PC table 300 includes an address column 302 where addresses of PCs capable of providing their computing capacities, and a software column 304 where titles of the software installed in each PC are described. As described above, the list of PCs registered as the software providing PC 14, and the list of PCs registered as the computing capacity providing PC 16a may be stored separately as available PC tables 300 different from each other. In addition, the information on the computing capacity providing PC 16a currently executing proxy computing is removed for a while from the available PC table, or additional information indicating the PC is currently executing is described in a check column prepared separately, before the execution of proxy computing is completed, so that the PC is not further selected as a PC to be requested to execute proxy computing.

In the case, it is at first confirmed whether a computing capacity providing PC selected from a list of PCs registered as the computing capacity providing PC 16a, is installed with the software, which is necessary for executing the proxy computing that the portable terminal 10a desires to request, from the descriptions in the software column 304. The computing capacity providing PC 16a may be selected in a certain order, for example, in a descending order from the top line of the available PC table 300, or a PC installed with the necessary software may be selected in preference to the others, with reference to the software titles described in the software column 304.

When the computing capacity providing PC 16a selected is not installed with the necessary software, a PC capable of providing the software is detected from the list of PCs registered as the software providing PC 14, based on the description in the software column 304, and is designated as the software providing PC 14. The portable terminal 10a acquires the addresses, which are described in the address column 302, of the software providing PC 14 and the computing capacity providing PC 16a thus selected.

An additional column may be added in the available PC table illustrated in Fig. 4, in which additional information on whether software or computing capacity can be provided is described. By referring to the column, the computing capacity providing PC 16a, and, if necessary, the software providing PC 14 may be selected.

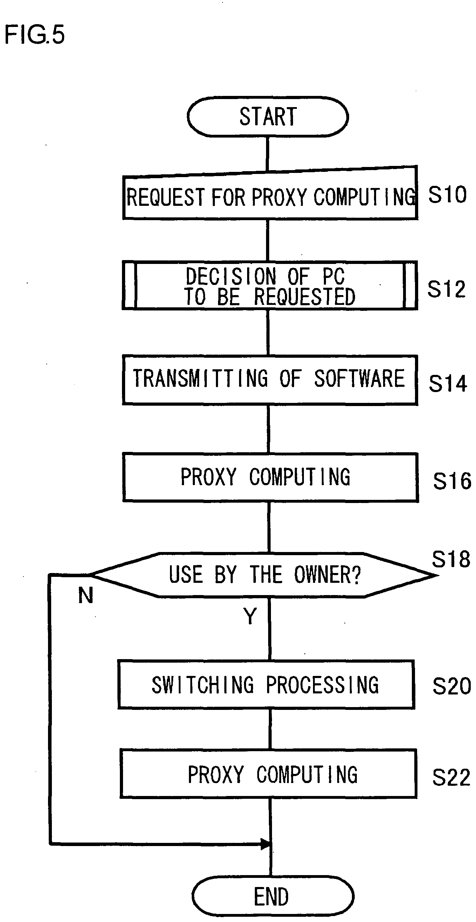

The operation of the IP system 100 implemented by the configuration mentioned above will be hereinafter described. Fig. 5 is a flowchart illustrating the whole processing procedures performed by the IP system 100. When a user at first makes an instruction input that he/she desires to request proxy computing in the portable terminal 10a (S10), the portable terminal 10a acquires the addresses of the software providing PC 14 and the computing capacity providing PC 16a, which are available, by inquiring of the server 12 or referring to the available PC table 300, and then performs processing for confirming the authenticity of the PCs, thereby decides a PC to be requested (S12).

The portable terminal 10a then requests the software providing PC 14 to provide the software by transmitting a signal including the software title and the address of the computing capacity providing PC 16a, and the PC 14 transmits the software to the PC 16a (S14). At the time, the portable terminal 10 requests the computing capacity providing PC 16a to provide its computing capacity by transmitting a signal including the information directed to the software to be executed, to the PC 16a, and the PC 16a activates the transmitted software to executes the proxy computing (S16).

In the case where the computing capacity providing PC 16a has been installed with the software to be executed, the process of S14 may be omitted. The process for executing proxy computing in S16 includes the process for transmitting the data obtained from the result of the proxy computing, to the portable terminal 10a. When an input related to proxy computing is made by operating the input unit 20 in the portable terminal 10a during the execution of the proxy computing, the information directed to the input is appropriately transmitted to the computing capacity providing PC 16a to be reflected in the proxy computing. For example, when a user performs an operation for a game in the portable terminal 10a while the images of the game are being processed by execution of proxy computing, the image data in which the operation is reflected is generated and transmitted to the terminal 10a. By displaying the image on the terminal 10a, the user can have a feeling as if he/she is playing the game using only the terminal 10a.

When the computing capacity providing PC 16a detects an input indicating that the owner of PC 16a desires to start normal processing (S18/Y), a signal indicating that the proxy computing is desired to be halted, is transmitted to the portable terminal 10a or the like, the switching processing is performed by the portable terminal 10a or the like, in which another computing capacity providing PC 16a registered in the available PC table 300, will execute the proxy computing (S20) . Specifically, a PC to be newly requested to execute proxy computing will be decided based on the address of the another computing capacity providing PC 16b, which is provided by the server 12, after the portable terminal 10a performs the same processing for confirming the authenticity thereof as that of S12. In S20, the data, such as an intermediate result of the processing, is transmitted by the computing capacity providing PC 16a having executed the proxy computing until then, to the computing capacity providing PC 16b to be newly requested to execute proxy computing.

The computing capacity providing PC 16b to be newly requested to execute proxy computing, then starts executing the processing (S22). When the owner of the computing capacity providing PC 16a, the first PC to be requested to execute proxy computing, does not start normal processing (S18/N), the execution of the proxy computing in S16 is naturally continued. When the owner of the new computing capacity providing PC 16b desires to start normal processing during the execution of the proxy computing, the processes of from S18 to S22 will be repeated with respect to another computing capacity providing PC.

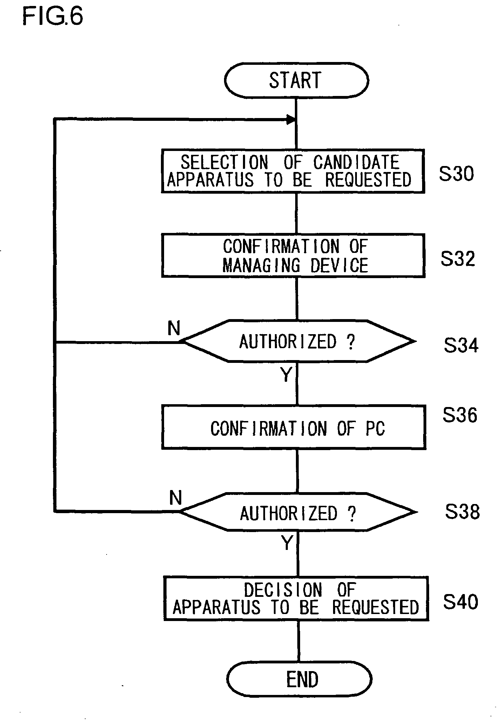

Fig. 6 is a flowchart illustrating in more detail procedures for deciding a PC to be requested, in S12 in Fig. 5. The portable terminal 10a at first acquires the address of a computing capacity providing PC selected from the capacity providing PC 16a or the like, which are registered in the available PC table 300 in the server 12, as a candidate for a PC to be requested to execute proxy computing (S30). When the selected PC 16a is not installed with a desired program, the selection is made with a software providing PC 14 included, as mentioned above.

The portable terminal 10a then accesses the computing capacity providing PC 16a to confirm the authenticity of the managing device 18d connected to the PC 16a (S32). Herein, the portable terminal 10a inquires about, for example, the secret key stored in the managing device 18d. At the time, the computing capacity providing PC 16a returns the secret key stored in the secret key storage 54 in the managing device 18d, to the portable terminal 10a, after encrypting the key by the controller 50. The controller 50 included in the managing device 18a in the portable terminal 10a, confirms the authenticity of the managing device 18d, by deciding whether the secret key obtained by decoding the received information is authorized.

When the managing device 18d is authorized (S34/Y), it is decided that the authorized managing device 18d is connected to the computing capacity providing PC 16a. The portable terminal 10a further confirms the authenticity of the computing capacity providing PC 16a itself. For example, the portable terminal 10a transmits a random number generated by the random number generator 56 in the managing device 18a, to the computing capacity providing PC 16a. The computing capacity providing PC 16a returns a value obtained by performing the predetermined processing on the received value. The portable terminal 10a confirms the authenticity of the computing capacity providing PC 16a by deciding whether the returned number is authorized. A normal authentication technology other than the above procedure may be applied to the confirmation of authentication. When confirmed to be authorized (S38/Y), the computing capacity providing PC 16a is decided as a PC to be requested to execute proxy computing (S40) .

When the managing device 18d cannot be confirmed to be authorized (S34/N), or the computing capacity providing PC 16a cannot be confirmed to be authorized (S38/N), the same confirmation procedures with respect to another computing capacity providing PC 16b or the like, which are registered in the available PC table 300, are repeated before they are confirmed to be authorized (S30 to S38).

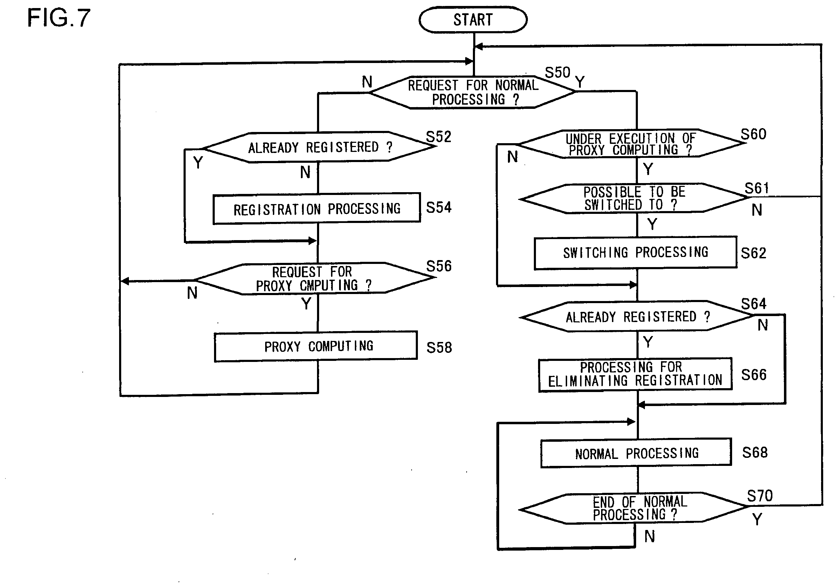

Fig. 7 is a flowchart illustrating processing procedures for switching between normal processing and proxy computing in the computing capacity providing PC 16a, the processing procedures being performed in parallel with that of Fig. 5. The computing capacity providing PC 16a receives a request for normal processing by the owner at any time (S50) . This may be possible by detecting an interrupt signal generated by an input for requesting normal processing inputted by the owner in the input unit 31, or by regularly confirming a flag indicating whether the input is made.

The above description is made assuming that a duration without a request for normal processing is one during which proxy computing can be executed, as it is; however, there may be three types of requests allowed according to the configuration of the input unit 31: requests for normal processing, for neither of normal processing nor proxy computing, and for proxy computing. In this case, the computing capacity providing PC 16a is to be registered in the available PC table 300, only when the owner desires to execute proxy computing. The following description will be made assuming that the computing capacity providing PC 16a is registered in the available PC table, under a situation without a request for normal processing.

When the computing capacity providing PC 16a is yet to be registered in the available PC table 300 in the server 12 (S52/N), during a duration without a request for normal processing by the owner (S50), the PC 16a performs registration processing, by transmitting a signal for requesting registration that includes its address and a software title installed in it, to the server 12 (S54) . At the time, the server 12 adds the information on the computing capacity providing PC 16a in the available PC table 300. The computing capacity providing PC 16a is naturally yet to be registered immediately after the owner thereof has completed normal processing. After registration, the computing capacity providing PC 16a starts executing proxy computing (S58), when there is a request for proxy computing from the portable terminal 10a, and the PC 16a is decided as a PC to be requested to execute the proxy computing (S56/Y). When not decided as a PC to be requested to execute the proxy computing (S56/Y), the computing capacity providing PC 16a maintains the state of being registered as long as there is not a request for normal processing by the owner (S50/N to S56/N).

When detecting a request for normal processing by the owner (S50/Y) and in a state of executing proxy computing (S60/Y), the computing capacity providing PC 16a at first communicates to the owner that it is under execution of proxy computing, and confirms whether it should switch to the normal processing with the proxy computing halted (S61) . When the owner gives priority on the proxy computing to halt switching to normal processing (S61/N), the proxy computing continues to be executed before the next request for normal processing is made (S50) . When the owner desires switching to normal processing (S61/Y), the proxy computing is switched to another computing capacity providing PC 16b (S62).

The process is performed by the cooperation of the server 12, the portable terminal 10a to request proxy computing, the computing capacity providing PC 16a under execution of the proxy computing, and the computing capacity providing PC 16b to be newly requested to execute proxy computing. The original computing capacity providing PC 16a continues executing the proxy computing performed until then, before the switching processing, that is, decision of the new computing capacity providing PC 16b, or the processing for transmitting the intermediate data to the PC 16b, etc., is completed.

When the computing capacity providing PC 16a is already registered in the available PC table 300 (S64/Y), the processing for eliminating the registration is performed by transmitting a signal for requesting the elimination of the registration, to the server 12 (S66). At the time, the server 12 eliminates the information on the computing capacity providing PC 16a from the available PC table 300. The computing capacity providing PC 16a under execution of proxy computing in S60, is naturally processed so as to be eliminated from registration in S66, because it is registered in the available PC table 300.

Because normal processing can be executed with the afore-mentioned procedures, the owner of the computing capacity providing PC 16a starts executing normal processing by his/her own input operations (S68) . When completing the execution of the normal processing (S70/Y), the procedure goes back to: S50/N deciding that there is no request for normal processing when no more normal processing is to be performed; or S50/Y deciding that there is a request for normal processing when another normal processing is to be performed. After that, the same processing as the afore-mentioned one will be performed. With this, a loop composed of the following steps: normal processing, registration in the available PC table, proxy computing, switching from the proxy computing, elimination of registration from the available PC table, and normal processing, can be realized.

A computing capacity providing system in which intentions of the owner of the computing capacity providing PC 16a are more reflected, can be provided by setting an opportunity when the owner selects whether the proxy computing under execution is given priority in S61, even when the owner desires normal processing in S60. Because the execution of the switching procedures, which is originally unnecessary, can be avoided as a result, occurrences of the risks entailing switching procedures, which might have some influence on the output of data in the portable terminal 10a, can be reduced.

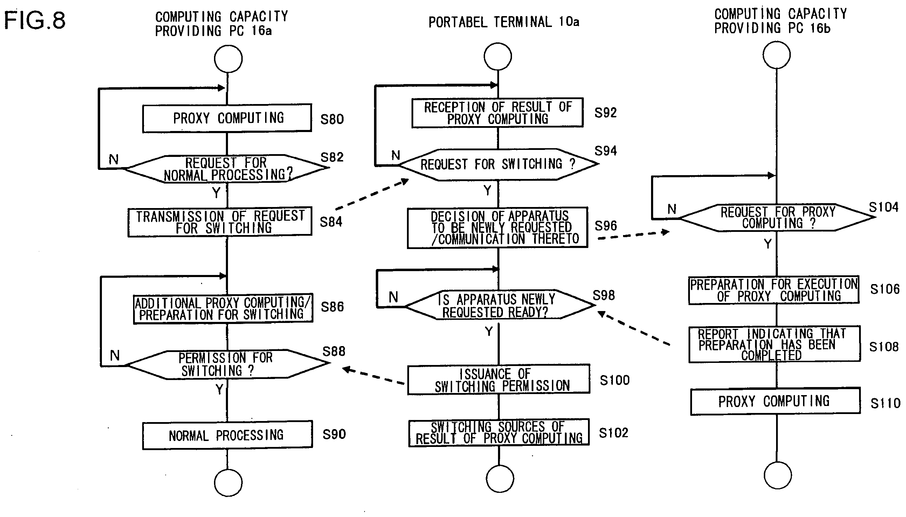

Fig. 8 is a flowchart illustrating in detail processing procedures performed by the computing capacity providing PCs 16a and 16b and the portable terminal 10a, in switching PCs executing proxy computing as illustrated in S16 to S22 in Fig. 5. Herein it is assumed that the computing capacity providing PC 16a is the PC that has preformed the proxy computing before switching, and the computing capacity providing PC 16b is the PC to perform the proxy computing after switching. The computing capacity providing PC 16a continues executing the proxy computing before a request for normal processing from the owner is received (S80, S82/N). During the execution, the portable terminal 10a appropriately acquires results of the proxy computing and outputs them to the output unit 24, or the like (S92, S94/N).

When receiving a request for normal processing from the owner in the computing capacity providing PC 16a (S82/Y), the PC 16a transmits a signal indicating that a request for switching has been made, to the portable terminal 10a (S84). When receiving the signal for requesting switching (S94/Y), the portable terminal 10a decides a PC to be newly requested to execute proxy computing, and communicates a request for proxy computing to the PC, that is, the computing capacity providing PC 16b (S96).

In detail, the portable terminal 10a acquires the address of the computing capacity providing PC 16b, a new candidate for a PC to be requested to execute proxy computing, from the server 12. The portable terminal 10a then decides the computing capacity providing PC 16b as a PC to be requested to execute proxy computing, after confirming the authenticity of the managing device 18 connected to the PC 16b and the PC 16b itself, in the same way as shown in Fig. 6. The signal for requesting proxy computing communicated to the computing capacity providing PC 16b, includes the address of the computing capacity providing PC 16a that has performed the proxy computing until then, and the information directed to the software to be processed.

When receiving the communication signal for requesting proxy computing transmitted by the portable terminal 10a (S104/Y), the computing capacity providing PC 16b starts preparing for the proxy computing (S106). Specifically, the PC 16b acquires the intermediate data necessary for continuing execution of the proxy computing, by transmitting a signal for requesting the PC 16a to transmit the data, to the computing capacity providing PC 16a that has executed the proxy computing until then. Or, the PC 16b acquires the software from the software providing PC 14, as necessary. On the other hand, the computing capacity providing PC 16a continues executing the proxy computing even after transmitting the signal for requesting switching, and further prepares for switching, such as transmitting the intermediate data, when receiving the signal requesting the intermediate data from the PC 16b(S86).

When the computing capacity providing PC 16b, a new PC to be requested to execute proxy computing, completes preparing for the proxy computing in that way, the PC 16b transmits a signal indicating that the preparation has been completed, to the portable terminal 10a (S108). When the signal indicating that the preparation is completed, is confirmed by the portable terminal 10a (S98/Y), the terminal 10a issues a signal indicating that the proxy computing can be switched to normal processing, to the computing capacity providing PC 16a that has executed the proxy computing until then (S100) . When receiving the signal for permitting the switching (S88/Y), the computing capacity providing PC 16a halts the proxy computing to start executing the normal processing the owner desires (S90).

On the other hand, the computing capacity providing PC 16b, a PC to be newly requested to execute proxy computing, starts executing the proxy computing using the intermediate data and the software obtained in S106 (S110). The portable terminal 10a switches the PCs from which the data is obtained as a result of the proxy computing, from the computing capacity providing PC 16a to the computing capacity providing PC 16b (S102). As described above, a request for normal processing by the owner of the computing capacity providing PC 16a, and a request for proxy computing by a user of the portable terminal 10a, can be both satisfied by appropriately receiving a request for starting executing normal processing by the owner of the PC 16a, and by keeping the PC 16a continuing the execution of the proxy computing before the computing capacity providing PC 16b to be newly requested to execute proxy computing, completes preparation for the proxy computing.

In the present embodiment, some authentication and surveillance mechanisms for preventing fraudulent dealings using a network, are introduced in order to provide software and computing capacity and make billing for that via the network. A request for proxy computing is at first made after confirming the authenticity of the managing device 18d and the computing capacity providing PC 16a, as described in Fig. 6. With this, a fraudulent dealing of accepting only a reward without really providing any computing capacity by obtaining a detachable managing device to connect it to an unauthorized apparatus, can be prevented.

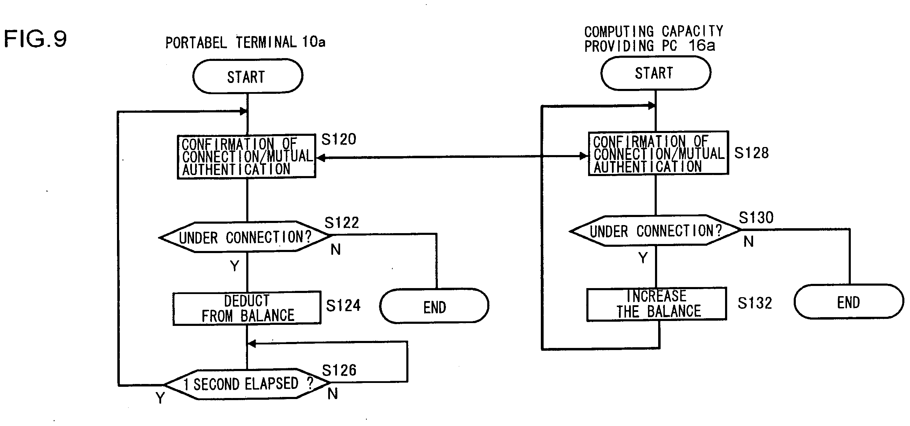

In the present embodiment, the same authentication processing is regularly performed during execution of proxy computing. In the case, mutual authentication between the portable terminal 10a and the computing capacity providing PC 16a is performed in order to avoid also a situation in which a reward is not paid by the requester despite providing computing capacity, contrary to the situation mentioned above. Fig. 9 is a flowchart illustrating processing procedures directed to billing and mutual authentication during execution of proxy computing. When execution of the proxy computing starts, the portable terminal 10a and the computing capacity providing PC 16a confirm the connection between them and perform mutual authentication (S120, S128). Herein, the mutual authentication is performed in a typical way in which secret keys stored in the secret key storage 54 of the managing devices 18a and 18d connected thereto, respectively, and a session key generated by the random number generator 56 are used.

When confirming they are being connected in S120 and S128 (S122/Y, S130/Y), the portable terminal 10a deducts a predetermined amount of unit price from the balance stored in the balance storage 52 in the managing device 18a connected thereto (S124). On the other hand, the computing capacity providing PC 16a increases the balance stored in the balance storage 52 in the managing device 18d (S132) . The amount deducted by the portable terminal 10a is naturally made equal to the amount increased by the computing capacity providing PC 16a. The above processing is repeated, for example, every second measured by the timer 58 in the managing device 18a connected to the portable terminal 10a.

With this, the portable terminal 10a can make payment after confirming that an authorized managing device 18d is connected to the computing capacity providing PC 16a and the PC 16a is operating itself. On the other hand, the computing capacity providing PC 16a is able to confirm that the managing device 18a connected to the portable terminal 10a has made payment.

Fig. 9 illustrates procedures in which a reward is paid only to the computing capacity providing PC 16a; however, it may be possible that some portion of the money paid by the portable terminal 10a during execution of proxy computing, will be obtained by the software providing PC 14 for providing software. Alternatively, it may also be possible that a fixed amount of money is paid by the portable terminal 10a to the software providing PC 14 as a reward, every time the PC 14 transmits software to the computing capacity providing PC 16a, pursuant to the nature of providing software. In any case, payment of reward can be made by deducting from the balance stored in the managing device 18a connected to the portable terminal 10a, and by increasing the balance stored in the managing device 18c connected to the software providing PC 14. Similarly, it may be possible that some portion of the money paid by the portable terminal 10a will be obtained by the server 12 and another site that provides the managing devices 18.

While the above description is made with respect to the processing for preventing fraudulent billing, similar countermeasures against fraudulent dealings are also taken with respect to transmitting data that are results of proxy computing and software. For example, when the proxy computing is the audio codec conversion, the original audio data that is to be transmitted by the portable terminal 10a to the computing capacity providing PC 16a, is prevented from illegally running out. In order to do that, the audio data is at first encrypted in the managing device 18a in the portable terminal 10a by the session key common with that of the computing capacity providing PC 16a, and transmitted. Because it can be confirmed that an managing device is connected to an authorized PC through the mutual authentication performed in S120 and S128 in Fig. 9, the audio data decoded by the session key in the managing device 18d in the computing capacity providing PC 16a, is surely transmitted to the information processor 30, which executes proxy computing, so that the codec conversion is performed.

When the software providing PC 14 transmits software to the computing capacity providing PC 16a, the managing device 18c also encrypts the software. In this case, the mutual authentication between the software providing PC 14 and the computing capacity providing PC 16a is performed in advance to hold session keys. In addition, in order to prevent software from illegally running out, the transmitted software may be eliminated from the memory in the computing capacity providing PC 16a, after a lapse of a certain period from the transmission of the software to the PC 16a, or after one session of proxy computing is completed. This procedure can be implemented by describing a function for eliminating a program itself in the program in advance, or by calling a command for elimination in the OS.

When setting a deadline for the software, the elapsed time after transmitting the software is measured with the timer 58 in the managing device 18d in the computing capacity providing PC 16a, operating. Before the deadline elapses, the proxy computing is switched so as to be performed by the another computing capacity providing PC 16b, in the same switching processing as that in S20 in Fig. 5. At the time, the software is transmitted again from the software providing PC 14 to the computing capacity providing PC 16b. With this, the execution of the proxy computing can smoothly proceed without being affected by the switching between the two computing capacity providing PCs, while a fraudulent dealing can be prevented by shortening the time during which the software remains in a certain computing capacity providing PC 16a.

Alternatively, it may also be possible that a software providing PC 14 is given a particular license, and a PC 14 with the license only has a right to transmit software to another PC. The license is given by, for example, a software vendor, a service provider for the server 12 or the like, and is stored in the managing device 18c with the information on the license encrypted. When the software providing PC 14 intends to transmit software to the computing capacity providing PC 16a, the controller 50 in the managing device 18c confirms in advance whether the PC 14 has the license, then the encrypted software is to be transmitted by the managing device 18c only when the information on the license is stored in the PC 14a.

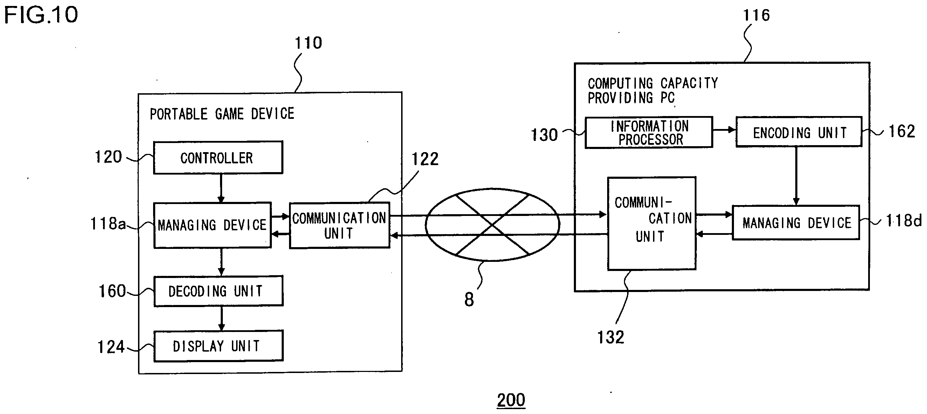

An example of implementation of the IP system 100 will be described below. Fig. 10 illustrates the structure of an IP system in the case where the portable terminal 10a is assumed to be a portable game device. The IP system 200 includes a portable game device 110 and a computing capacity providing PC 116, and they transmits/receives a signal for requesting execution of proxy computing and the data as a result of the proxy computing. The server 12 and the software providing PC 14 illustrated in Fig. 1 are omitted in the drawing; however, the server 12 and the software providing PC 14, which are connected to the network 8, are assumed to perform the same processing as described above as necessary, before the computing capacity providing PC 116 starts executing the proxy computing requested by the portable game device 110.

In the IP system 200, for example, the computing capacity providing PC 116 provided with a processor in which high-speed and high-resolution image processing exceeding that of the portable game device 110, can be performed, executes the proxy computing for processing motion images. By encoding the frame data of the motion images created in the computing capacity providing PC 116, and by decoding and outputting them in the portable game device 110, a user can enjoy an advanced game using the portable game device 110 to be an entrance device, even when the computing capacity of the game device 110 is simple.

The portable game device 110 includes a controller 120, a managing device 118a, a communication unit 122, a decoding unit 160, and a display unit 124. The controller 120 corresponds to the input unit 20 in the portable terminal 10a illustrated in Fig. 2, and receives an instruction input directed to a request for proxy computing at the beginning of a game, or to an input made during a game. The managing device 118a and the communication unit 122 perform the same processing as that of the managing device 18a and the communication unit 22 in the portable terminal 10a in Fig. 2. The decoding unit 160 decodes the encoded frame data of motion images transmitted by the computing capacity providing PC 116. The display unit 124 corresponds to the output unit 26 in the portable terminal 10a in Fig. 2, and outputs the frame data of motion images decoded by the decoding unit 160, and displays a screen for receiving an instruction input for starting a game and the like.

When a user makes an input for a game in the controller 120, a control parameter corresponding to the input is transmitted to the computing capacity providing PC 116.

The computing capacity providing PC 116 includes an information processor 130, an encoding unit 162, a managing device 118d, and a communication unit 132. The information processor 130 corresponds to the information processor 30 in the computing capacity providing PC 16a in Fig. 2, and performs image processing to create frame data of motion pictures based on the control parameter transmitted by the portable game device 110, according to the present implementation example. The encoding unit 162 encodes the frame data of motion images created by the information processor 130 using intraframe coding. The time necessary for encoding processing can be shortened by using intraframe coding, therefore the data of motion images in the portable game device 110 can be outputted at a higher speed. Moreover, because the processing load in the computing capacity providing PC 116 can be reduced, each of a plurality of proxy computing can be smoothly executed, when the PC 116 executes the multiple proxy computing in parallel.

The managing device 118d and the communication unit 132 perform the same processing as that of the managing device 18d and the communication unit 32 in the computing capacity providing PC 16a in Fig. 2. The managing device 118d transmits the data encoded by the encoding unit 162 after encrypting it using the session key or the like. With this, the image data can be prevented from running out into another terminal connected to the network 8.

The computing capacity providing PC 116 may be a PC or the like that a user who operates the portable game device 110 owns at home. In the case, the billing processing illustrated in Fig. 9 can be at least omitted. To deal with such cases, the personal information of the owner may be stored in the managing devices 118a and 118d in advance. And when connecting the portable game device 110 with the computing capacity providing PC 116, the both personal information stored in the managing devices 118a and 118d, are at first compared together by either of the managing devices. When the both information are identical, the billing processing is omitted in the both managing devices 118a and 118d. When transmitting the personal information from one managing device to another in order to compare the both information, the information is desired to be encrypted.

Various proxy computing can be executed by the computing capacity providing PC 116 with the same structure as that of the IP system 200 in Fig. 10. As an example for that, the case where the portable game device 110 is replaced by a TV set, is possible. When a plurality of channel images are desired to be displayed on a screen in order to select a channel in a TV set, or a channel image is desired to be displayed on a small window on another channel screen, signals from a plurality of broadcast stations are demodulated and decoded by the computing capacity providing PC 116.

In this case, the computing capacity providing PC 116 also acquires the control data of a channel desired to be displayed from the TV set, and demodulates and decodes signals from a plurality of broadcast stations based on the control data to make a piece of motion image data by arranging the plurality of images obtained. The piece of motion image data is then encoded using intraframe coding to be transmitted to the TV set, which decodes the transmitted data and displays it. With this, images of a plurality of channels can be smoothly displayed, even when a TV set is not provided with a plurality of tuners or a TV set has a simple structure in which a computing speed is slow or the like. Assuming that displaying only one channel is normal processing by a TV set, it is also possible that images of a plurality of channels are displayed by proxy computing only for a time while selecting a channel, by performing the processing for switching between proxy computing and normal processing, in the same way as the processing procedures illustrated in Fig. 7.

According to the present embodiments described above, both of the computing capacity providing side and the proxy computing requesting side can easily find a counterpart by registering computers that are connected to a network and are not being used by the owner or can afford to perform processing, in a server. Moreover, a computing capacity providing PC can be readily switched to another PC in executing a session of proxy computing, therefore the owner of the PC can start normal processing without complicated procedures. When switching a PC executing proxy computing to another, the PC continues the proxy computing before the another PC is ready to start executing the same. With this, output troubles entailing the switching, such as stagnation or intermittence of the proxy computing, can be prevented.

As a result, a result obtained from advanced processing can be readily and smoothly enjoyed, even in a terminal having simple resources for computing capacity or storage capacity, etc. By realizing a system in which computing capacity and software can be readily and safely hired in this way, a user can feel as if he/she is operating a high performance terminal when operating a terminal having a simple structure, for example. Moreover, the sides of providing computing capacity or software can readily and safely make a profit.

When the software for executing the proxy computing is not installed in a computer that provides its computing capacity, the software can be readily installed by registering computers capable of providing the software in the server. With this, the processing for meeting user's diversified needs can be readily realized, even when a simple terminal, such as portable terminal, is not provided with the storage capacity enough to store the desired software, or is not installed with the software for some reasons.

The procedures directed to proxy computing are collectively carried out by managing devices connected to a computing capacity providing computer, a software providing computer, and a terminal requesting proxy computing, respectively. Because the managing devices carry out authentication of the managing device and the computer of the other end of connection, or encryption of the data to be transmitted, the processing for billing or transmitting /receiving software and data can be safely performed, thereby running out of data and theft of software or the like can be prevented.

Because billing can be safely carried out, a computing capacity providing computer, a software providing computer, and a server, etc., can surely be paid for providing their capacities, respectively. In addition, with the managing device being in the form of a card, data and software can be readily managed by using a card in which an encrypted secret key, license information, or information on electronic money, or the like, are written externally, only by allowing each apparatus to be provided with a slot capable of reading the card; thereby leading to increased safety and convenience at a low cost.

The present invention has been described above in conjunction with the embodiments thereof. The embodiment has been given solely by way of illustration, and it will be understood by a person skilled in the art that various modifications may be made to combinations of the foregoing components and processes, and all such modifications are also intended to fall within the scope of the present invention.

For example, a computing capacity providing PC executes the proxy computing requested by a portable terminal in the present embodiment; however, a plurality of computing capacity providing PCs may share the execution of the proxy computing. For example, when images of a plurality of channels are desired to be displayed, each of a plurality of computing capacity providing PCs is assigned the demodulation and decoding processing of signals from each broadcast station. In the case, a computing capacity providing PC may perform the processing for assigning the task to each computing capacity providing PC, or the processing for integrating image data created by each of them. Besides that, audio processing and image processing of a single game can be separately performed by different computing capacity providing PCs; likewise, when parallel processing can be performed, the similar processing as described above can be performed. With this, even when each of the computing capacity providing PCs is provided with insufficient capacity, for example, the PC is not provided with a plurality of tuners, a more advanced result can be obtained by gathering the capacity of each PC.

A period necessary for a result of proxy computing to be displayed may be shortened by executing the proxy computing despite whether the result of the proxy computing is to be displayed on a portable terminal. For example, when displaying images of multiple channels, each computing capacity providing PC is assigned to perform processing for demodulating and decoding each of a plurality of signals during periods including other periods than when selecting a channel, even in an aspect where images of multiple channels are to be displayed only when selecting a channel. And, the images of multiple channels, which are obtained as a result of the proxy computing, are to be displayed on a TV set, as necessary when, for example, selecting a channel. With this, the response performance to an input by a user can be improved, because switching of output can be carried out instantly, in comparison with the case where proxy computing is requested abruptly after the user has made an input indicating that he/she desires a result of the proxy computing to be outputted when selecting a channel or the like.

Similarly, it may be possible that proxy computing is executed by a plurality of computing capacity providing PCs in parallel and results thereof are acquired from only a single computing capacity providing PC. In the case, the execution of the proxy computing can also be continued more readily and safely, because it is not required to decide a PC to be newly to execute requested to execute proxy computing, or to transmit the intermediate data, when switching computing capacity providing PCs.

In addition, a plurality of software providing PCs may also be provided as PCs specializing in that, at the facilities managed by a software vendor or the like. With this, management of software and reception of payment can be carried out surely and safely.

### INDUSTRIAL APPLICABILITY

As mentioned above, the present invention is applicable to an IP system in which an electronic apparatus, such as computer, game device, TV set, or audio reproduce apparatus, is a terminal.

## Claims

1. An information processing apparatus (16a) for executing proxy computing for a person who operates another information processing apparatus (10a) connected thereto via a network, by providing its computing resource to the another information processing apparatus (10a), the information processing apparatus (16a) comprising:
an input unit (31) adapted to receive a permission from a user for executing proxy computing;
a communication unit (32) adapted to, when the input unit receives the permission, register its own address in a list stored in a server (12),
an information processor (30, 18d) adapted to execute proxy computing, in a response to selection from the list by an information processing apparatus requesting proxy computing (10a); and wherein
the communication unit (32) is adapted to transmit a result of the proxy computing to the information processing apparatus requesting proxy computing (10a),
wherein
the input unit (31) is adapted further to receive an indication to withdraw the permission from the user, and
when the input unit (31) receives the indication while being executing the proxy computing in the information processor (30, 18d), the communication unit (32) informs the information processing apparatus requesting the proxy computing (10a) of the indication, and transmits the intermediate data of the proxy computing to another information processing apparatus (16b) which is capable of executing proxy computing and newly selected by the information processing apparatus requesting proxy computing (10a), and the information processor (30, 18d) halts the proxy computing, when receiving a switching permission signal, from the information processing apparatus requesting the proxy computing (10a), indicating that the another information processing apparatus (16b) becomes capable of continuing to execute the proxy computing, as a result of transmitting the intermediate data by the communication unit (32) .

2. The information processing apparatus (16a) according to claim 1, wherein the information processor (30, 18d) executes the proxy computing by reading the software necessary for the proxy computing into its memory, which is transmitted by the software providing information processing apparatus (14) that provides software held by itself via a network, and by activating it to execute the proxy computing.

3. The information processing apparatus (16a) according to claim 2, wherein the information processor (30, 18d) measures an elapsed time after transmitting the software, and eliminates a program of the software from the memory when the elapsed time exceeds a predetermined deadline.

4. The information processing apparatus (16a) according to claim 1, wherein the information processor (30, 18d) further comprises a managing unit (18d) that confirms, while executing the proxy computing, the connection with the information processing apparatus to request proxy computing (10a) and the billing at a predetermined period; and wherein the information processor (30, 18d) continues to execute the proxy computing, when the connection and the billing are confirmed to be performed properly by the managing unit (18d).

5. The information processing apparatus (16a) according to claim 1, wherein the execution of the proxy computing comprises creating of the frame data of a motion image, and the information processor (30, 18d) performs intraframe coding of the created frame data of the motion image, and the communication unit (32) transmits the intraframe coded data to the information processing apparatus to request proxy computing (10a).

6. An information processing method in which an information processing apparatus (10a) operated by a user makes another information processing apparatus (16a) connected thereto via a network execute proxy computing for the user, and receives a result of the proxy computing from the another information processing apparatus (16a) to utilize it, the method being performed by the information processing apparatus requesting the proxy computing (10a), the method comprising:
acquiring the address of a first information processing apparatus to be requested to execute proxy computing (16a), by selecting from a list of information processing apparatuses capable of executing proxy computing, stored in a server (12) connected to the network;
transmitting a signal for requesting the first information processing apparatus to be requested to execute proxy computing (16a), to execute proxy computing, based on the acquired address;
receiving a result of the proxy computing from the first information processing apparatus to be requested to execute proxy computing (16a);
acquiring the address of a second information processing apparatus to be required proxy computing (16b), selected from the list of information processing apparatuses capable of executing proxy computing, when receiving a signal for requesting a halt to execution of the proxy computing from the first information processing apparatus to be requested to execute proxy computing (16a);
transmitting a signal for requesting the second information processing apparatus to be requested to execute proxy computing (16b), to execute the proxy computing based on the acquired address;
receiving a signal indicating that the second information processing apparatus to be requested to execute proxy computing (16b) is ready to continue to execute the proxy computing; and
switching sources of a result of the proxy computing from the first information processing apparatus to be requested to execute proxy computing (16a), to the second information processing apparatus to be requested to execute proxy computing (16b).

7. The information processing method according to claim 6, wherein the method further comprises: acquiring the address of a software providing information processing apparatus (14) capable of providing the software necessary for executing the proxy computing, from a list of information processing apparatuses capable of providing software, which are stored in the server (12); and transmitting a signal for requesting transmitting of the necessary software to the first information processing apparatus to be requested to execute proxy computing (16a), to the software providing information processing apparatus (14).

8. A computer program product adapted to make a computer (16a) execute proxy computing for a person who operates another information processing apparatus (10a) connected thereto via a network, by providing its computing resource to the another information processing apparatus (10a), the computer program product comprising:
a first module adapted to receive a permission from a user for executing proxy computing;
a second module adapted to, when the permission is received, that registers the computer's address in a list stored in a server (12);
a third module adapted to execute proxy computing, in a response to selection from the list of an information processing apparatus requesting proxy computing (10a);
the second module being adapted to transmit a result of the proxy computing to the information processing apparatus requesting proxy computing (10a);
the first module being further adapted to receive an indication to withdraw the permission from the user;
the first module being adapted to, when the indication is received while being executing the proxy computing, inform the information processing apparatus requesting the proxy computing (10a) of the indication, and to transmit the intermediate data of the proxy computing to another information processing apparatus (16b) which is capable of executing proxy computing and newly selected by the information processing apparatus requesting proxy computing (10a),
and
a module that halts the proxy computing, when receiving a switching permission signal, from the information processing apparatus requesting the proxy computing (10a), indicating that the another information processing apparatus (16b) becomes capable of continuing to execute the proxy computing, as a result of transmitting the intermediate data.

## Patentansprüche

1. Informationsverarbeitungseinrichtung (16a) zum Ausführen einer Proxy-Datenverarbeitung für eine Person, die eine andere Informationsverarbeitungseinrichtung (10a) betreibt, die über ein Netzwerk damit verbunden ist, durch Bereitstellen ihrer Datenverarbeitungsressource an die andere Informationsverarbeitungseinrichtung (10a), die Informationsverarbeitungseinrichtung (16a) umfassend:
eine Eingabeeinheit (31), die dazu vorgesehen ist, eine Erlaubnis von einem Benutzer zum Ausführen einer Proxy-Datenverarbeitung zu empfangen;
eine Kommunikationseinheit (32), die dazu vorgesehen ist, um, wenn die Eingabeeinheit die Erlaubnis empfängt, ihre eigene Adresse in einer auf einem Server (12) gespeicherten Liste zu registrieren,
einen Informationsprozessor (30, 18d), der dazu vorgesehen ist, eine Proxy-Datenverarbeitung in Reaktion auf die Auswahl aus der Liste durch eine Proxy-Datenverarbeitung anfordernde Informationsverarbeitungseinrichtung (10a) durchzuführen; und wobei
die Kommunikationseinheit (32) dazu vorgesehen ist, ein Ergebnis der Proxy-Datenverarbeitung an die eine Proxy-Datenverarbeitung anfordernde Informationsverarbeitungseinrichtung (10a) zu übertragen,
wobei
die Eingabeeinheit (31) ferner dazu vorgesehen ist, eine Angabe zum Widerrufen der Erlaubnis von dem Benutzer zu empfangen, und
wenn die Eingabeeinheit (31) die Angabe empfängt, während die Proxy-Datenverarbeitung in dem Informationsprozessor (30, 18d) ausgeführt wird, die Kommunikationseinheit (32) die die Proxy-Datenverarbeitung anfordernde Informationsverarbeitungseinrichtung (10a) über die Angabe informiert und die Zwischendaten der Proxy-Datenverarbeitung an eine andere Informationsverarbeitungseinrichtung (16b) überträgt, die fähig ist, die Proxy-Datenverarbeitung auszuführen, und von der die Proxy-Datenverarbeitung anfordernden Informationsverarbeitungseinrichtung (10a) neu ausgewählt wird, und der Informationsprozessor (30, 18d) die Proxy-Datenverarbeitung anhält, wenn ein Umschaltberechtigungssignal von der die Proxy-Datenverarbeitung anfordernden Informationsverarbeitungseinrichtung (10a) empfangen wird, das angibt, dass die andere Informationsverarbeitungseinrichtung (16b) nun fähig ist, die Proxy-Verarbeitung infolge der Übertragung der Zwischendaten durch die Kommunikationseinheit (32) weiter auszuführen.

2. Informationsverarbeitungseinrichtung (16a) nach Anspruch 1, wobei der Informationsprozessor (30, 18d) die Proxy-Datenverarbeitung durch Lesen der für die Proxy-Datenverarbeitung erforderlichen Software in seinen Speicher, die von der die Software bereitstellenden Informationsverarbeitungseinrichtung (14) übertragen wird, die die sich selbst über ein Netzwerk verwaltende Software bereitstellt, und durch deren Aktivieren zur Ausführung der Proxy-Datenverarbeitung ausführt.

3. Informationsverarbeitungseinrichtung (16a) nach Anspruch 2, wobei der Informationsprozessor (30, 18d) eine verstrichene Zeit nach dem Übertragen der Software misst und ein Programm der Software aus dem Speicher entfernt, wenn die verstrichene Zeit eine vorbestimmte Frist überschreitet.

4. Informationsverarbeitungseinrichtung (16a) nach Anspruch 1, wobei der Informationsprozessor (30, 18d) ferner eine Verwaltungseinheit (18d) umfasst, die während der Ausführung der Proxy-Datenverarbeitung die Verbindung mit der die Proxy-Datenverarbeitung anzufordernden Informationsverarbeitungseinrichtung (10a) und die Abrechnung zu einem vorbestimmten Zeitpunkt bestätigt; und wobei der Informationsprozessor (30, 18d) die Proxy-Datenverarbeitung weiter ausführt, wenn bestätigt wird, dass die Verbindung und die Abrechnung ordnungsgemäß durch die Verwaltungseinheit (18d) durchgeführt werden.

5. Informationsverarbeitungseinrichtung (16a) nach Anspruch 1, wobei die Ausführung der Proxy-Datenverarbeitung das Erzeugen der Rahmendaten eines Bewegtbilds umfasst und der Informationsprozessor (30, 18d) eine Zwischenrahmenkodierung der erzeugten Rahmendaten des Bewegtbilds durchführt und die Kommunikationseinheit (32) die zwischenrahmenkodierten Daten an die die Proxy-Datenverarbeitung anzufordernde Informationsverarbeitungseinrichtung (10a) überträgt.

6. Informationsverarbeitungsverfahren, bei dem eine durch einen Benutzer betriebene Informationsverarbeitungseinrichtung (10a) eine andere Informationsverarbeitungseinrichtung (16a), die über ein Netzwerk damit verbunden ist, dazu veranlasst, eine Proxy-Datenverarbeitung für den Benutzer auszuführen, und ein Ergebnis der Proxy-Datenverarbeitung von der anderen Informationsverarbeitungseinrichtung (16a) zur Nutzung empfängt, wobei das Verfahren von der die Proxy-Datenverarbeitung anfordernden Informationsverarbeitungseinrichtung (10a) durchgeführt wird, das Verfahren umfassend:
Erfassen der Adresse einer ersten zum Ausführen der Proxy-Datenverarbeitung anzufordernden Informationsverarbeitungseinrichtung (16a) durch Auswählen aus einer Liste von zur Ausführung von Proxy-Datenverarbeitung fähigen Informationsverarbeitungseinrichtungen, die auf einem mit dem Netzwerk verbundenen Server (12) gespeichert ist;
Übertragen eines Signals zum Anfordern der ersten zum Ausführen der Proxy-Datenverarbeitung anzufordernden Informationsverarbeitungseinrichtung (16a), um die Proxy-Datenverarbeitung basierend auf der erfassten Adresse auszuführen;
Empfangen eines Ergebnisses der Proxy-Datenverarbeitung von der ersten zum Ausführen der Proxy-Datenverarbeitung anzufordernden Informationsverarbeitungseinrichtung (16a);
Erfassen der Adresse einer zweiten erforderlich zu sein der Proxy-Datenverarbeitung (16b) Informationsverarbeitungseinrichtung, die aus einer Liste von zur Ausführung von Proxy-Datenverarbeitung fähigen Informationsverarbeitungseinrichtungen ausgewählt wird, wenn ein Signal zum Anfordern eines Anhaltens der Ausführung der Proxy-Datenverarbeitung von der ersten zum Ausführen der Proxy-Datenverarbeitung anzufordernden Informationsverarbeitungseinrichtung (16a) empfangen wird;
Übertragen eines Signals zum Anfordern der zweiten zum Ausführen der Proxy-Datenverarbeitung anzufordernden Informationsverarbeitungseinrichtung (16b), um die Proxy-Datenverarbeitung basierend auf der erfassten Adresse auszuführen;
Empfangen eines Signals, das angibt, dass die zweite zum Ausführen der Proxy-Datenverarbeitung anzufordernde Informationsverarbeitungseinrichtung (16b) bereit ist, die Proxy-Datenverarbeitung weiter auszuführen; und
Umschalten von Quellen aufgrund eines Ergebnisses der Proxy-Datenverarbeitung von der ersten zum Ausführen der Proxy-Datenverarbeitung anzufordernden Informationsverarbeitungseinrichtung (16a) auf die zweite zum Ausführen der Proxy-Datenverarbeitung anzufordernde Informationsverarbeitungseinrichtung (16b) .

7. Informationsverarbeitungsverfahren nach Anspruch 6, wobei das Verfahren ferner umfasst: Erfassen der Adresse einer Software bereitstellenden Informationsverarbeitungseinrichtung (14), die fähig ist, die zum Ausführen der Proxy-Datenverarbeitung erforderliche Software bereitzustellen, aus einer Liste von zur Bereitstellung von Software fähigen Informationsverarbeitungseinrichtungen, die auf dem Server (12) gespeichert sind; und Übertragen eines Signals zum Anfordern der Übertragung der erforderlichen Software an die erste zum Ausführen der Proxy-Datenverarbeitung anzufordernde Informationsverarbeitungseinrichtung (16a) an die die Software bereitstellende Informationsverarbeitungseinrichtung (14).

8. Computerprogrammprodukt, das dazu vorgesehen ist, einen Computer (16a) zu veranlassen, eine Proxy-Datenverarbeitung für eine Person auszuführen, die eine andere Informationsverarbeitungseinrichtung (10a) über ein Netzwerk betreibt, durch Bereitstellen ihrer Datenverarbeitungsressource an die andere Informationsverarbeitungseinrichtung (10a), das Computerprogrammprodukt umfassend:
ein erstes Modul, das dazu vorgesehen ist, eine Erlaubnis von einem Benutzer zum Ausführen einer Proxy-Datenverarbeitung zu empfangen;
ein zweites Modul, das dazu vorgesehen ist, wenn die Erlaubnis empfangen wird, die Adresse des Computers in einer auf einem Server (12) gespeicherten Liste zu registrieren;
ein drittes Modul, das dazu vorgesehen ist, eine Proxy-Datenverarbeitung in Reaktion auf eine Auswahl einer eine Proxy-Datenverarbeitung anfordernden Informationsverarbeitungseinrichtung (10a) aus der Liste durchzuführen;
wobei das zweite Modul dazu vorgesehen ist, ein Ergebnis der Proxy-Datenverarbeitung an die eine Proxy-Datenverarbeitung anfordernde Informationsverarbeitungseinrichtung (10a) zu übertragen;
wobei das erste Modul ferner dazu vorgesehen ist, eine Angabe zu empfangen, um die Erlaubnis von dem Benutzer zu widerrufen;
wobei das erste Modul dazu vorgesehen ist, wenn die Angabe während der Ausführung der Proxy-Datenverarbeitung empfangen wird, die die Proxy-Datenverarbeitung anfordernde Informationsverarbeitungseinrichtung (10a) über die Angabe zu informieren und die Zwischendaten der Proxy-Datenverarbeitung an eine andere Informationsverarbeitungseinrichtung (16b) zu übertragen, die fähig ist, die Proxy-Datenverarbeitung auszuführen, und von der die Proxy-Datenverarbeitung anfordernden Informationsverarbeitungseinrichtung (10a) neu ausgewählt wird, und
ein Modul, das die Proxy-Datenverarbeitung anhält, wenn ein Umschaltberechtigungssignal von der die Proxy-Datenverarbeitung anfordernden Informationsverarbeitungseinrichtung (10a) empfangen wird, das angibt, dass die andere Informationsverarbeitungseinrichtung (16b) nun fähig ist, die Proxy-Verarbeitung infolge der Übertragung der Zwischendaten weiter auszuführen.

## Revendications

1. Appareil de traitement d'informations (16a) pour exécuter un calcul informatique de procuration pour une personne qui exploite un autre appareil de traitement d'informations (10a) connecté à celui-ci via un réseau, en fournissant sa ressource de calcul informatique à l'autre appareil de traitement d'informations (10a), l'appareil de traitement d'informations (16a) comprenant :
une unité d'entrée (31) adaptée pour recevoir une permission en provenance d'un utilisateur pour exécuter un calcul informatique de procuration ;
une unité de communication (32) adaptée, lorsque l'unité d'entrée reçoit la permission, pour enregistrer sa propre adresse dans une liste stockée dans un serveur (12),
un processeur d'informations (30, 18d) adapté pour exécuter un calcul informatique de procuration, en réponse à une sélection dans la liste par un appareil de traitement d'informations demandant un calcul informatique de procuration (10a) ; et dans lequel l'unité de communication (32) est adaptée pour transmettre un résultat du calcul informatique de procuration à l'appareil de traitement d'informations demandant un calcul informatique de procuration (10a), dans lequel
l'unité d'entrée (31) est en outre adaptée pour recevoir une indication de retirer la permission en provenance de l'utilisateur, et
lorsque l'unité d'entrée (31) reçoit l'indication tout en exécutant le calcul informatique de procuration dans le processeur d'informations (30, 18d), l'unité de communication (32) informe l'appareil de traitement d'informations demandant le calcul informatique de procuration (10a) de l'indication, et transmet les données intermédiaires du calcul informatique de procuration à un autre appareil de traitement d'informations (16b) qui est capable d'exécuter un calcul informatique de procuration et nouvellement sélectionné par l'appareil de traitement d'informations demandant un calcul informatique de procuration (10a), et le processeur d'informations (30, 18d) arrête le calcul informatique de procuration, lorsqu'il reçoit un signal de permission de commutation, en provenance de l'appareil de traitement d'informations demandant le calcul informatique de procuration (10a), indiquant que l'autre appareil de traitement d'informations (16b) devient capable de continuer d'exécuter le calcul informatique de procuration, suite à la transmission des données intermédiaires par l'unité de communication (32).

2. Appareil de traitement d'informations (16a) selon la revendication 1, dans lequel le processeur d'informations (30, 18d) exécute le calcul informatique de procuration en lisant le logiciel nécessaire pour le calcul informatique de procuration dans sa mémoire, qui est transmis par le logiciel fournissant l'appareil de traitement d'informations (14) qui fournit un logiciel détenu par lui-même via un réseau, et en l'activant pour exécuter le calcul informatique de procuration.

3. Appareil de traitement d'informations (16a) selon la revendication 2, dans lequel le processeur d'informations (30, 18d) mesure un temps écoulé après transmission du logiciel, et élimine un programme du logiciel de la mémoire lorsque le temps écoulé dépasse une échéance prédéterminée.

4. Appareil de traitement d'informations (16a) selon la revendication 1, dans lequel le processeur d'informations (30, 18d) comprend en outre une unité de gestion (18d) qui confirme, tout en exécutant le calcul informatique de procuration, la connexion avec l'appareil de traitement d'informations pour demander le calcul informatique de procuration (10a) et la facturation à une période prédéterminée ; et dans lequel le processeur d'informations (30, 18d) continue d'exécuter le calcul informatique de procuration, lorsque la réalisation correcte de la connexion et de la facturation est confirmée par l'unité de gestion (18d).

5. Appareil de traitement d'informations (16a) selon la revendication 1, dans lequel l'exécution du calcul informatique de procuration comprend la création des données d'image d'une image animée, et le processeur d'informations (30, 18d) réalise un codage intra-image des données d'image créées de l'image animée, et l'unité de communication (32) transmet les données codées d'intra-image à l'appareil de traitement d'informations pour demander un calcul informatique de procuration (10a).

6. Procédé de traitement d'informations dans lequel un appareil de traitement d'informations (10a) exploité par un utilisateur amène un autre appareil de traitement d'informations (16a) connecté à celui-ci via un réseau à exécuter un calcul informatique de procuration pour l'utilisateur, et reçoit un résultat du calcul informatique de procuration en provenance de l'autre appareil de traitement d'informations (16a) pour l'utiliser, le procédé étant réalisé par l'appareil de traitement d'informations demandant le calcul informatique de procuration (10a), le procédé comprenant :
l'acquisition de l'adresse d'un premier appareil de traitement d'informations auquel on demande d'exécuter un calcul informatique de procuration (16a), par sélection dans une liste d'appareils de traitement d'informations capables d'exécuter un calcul informatique de procuration, stockée dans un serveur (12) connecté au réseau ;
la transmission d'un signal pour demander au premier appareil de traitement d'informations auquel on demande d'exécuter un calcul informatique de procuration (16a), d'exécuter un calcul informatique de procuration, d'après l'adresse acquise ;
la réception d'un résultat du calcul informatique de procuration en provenance du premier appareil de traitement d'informations auquel on demande d'exécuter un calcul informatique de procuration (16a) ;
l'acquisition de l'adresse d'un second appareil de traitement d'informations à être requis un calcul informatique de procuration (16b), sélectionné dans la liste d'appareils de traitement d'informations capables d'exécuter un calcul informatique de procuration, lors de la réception d'un signal de demande d'un arrêt d'exécution du calcul informatique de procuration en provenance du premier appareil de traitement d'informations auquel on demande d'exécuter un calcul informatique de procuration (16a) ;
la transmission d'un signal pour demander au second appareil de traitement d'informations auquel on demande d'exécuter un calcul informatique de procuration (16b), d'exécuter le calcul informatique de procuration, d'après l'adresse acquise ;
la réception d'un signal indiquant que le second appareil de traitement d'informations auquel on demande d'exécuter le calcul informatique de procuration (16b) est prêt à continuer d'exécuter le calcul informatique de procuration ; et
la commutation de sources d'un résultat du calcul informatique de procuration du premier appareil de traitement d'informations auquel on demande d'exécuter un calcul informatique de procuration (16a), au second appareil de traitement d'informations auquel on demande d'exécuter un calcul informatique de procuration (16b).

7. Procédé de traitement d'informations selon la revendication 6, dans lequel le procédé comprend en outre : l'acquisition de l'adresse d'un logiciel fournissant l'appareil de traitement d'informations (14) capable de fournir le logiciel nécessaire pour exécuter le calcul informatique de procuration, dans une liste d'appareils de traitement d'informations capables de fournir le logiciel, qui est stockée dans le serveur (12) ; et la transmission d'un signal pour demander la transmission du logiciel nécessaire au premier appareil de traitement d'informations auquel on demande d'exécuter un calcul informatique de procuration (16a), au logiciel fournissant l'appareil de traitement d'informations (14).

8. Produit-programme d'ordinateur adapté pour amener un ordinateur (16a) à exécuter un calcul informatique de procuration pour une personne qui exploite un autre appareil de traitement d'informations (10a) connecté à celui-ci via un réseau, en fournissant sa ressource de calcul informatique à l'autre appareil de traitement d'informations (10a), le produit-programme d'ordinateur comprenant :
un premier module adapté pour recevoir une permission en provenance d'un utilisateur pour exécuter un calcul informatique de procuration ;
un deuxième module adapté, lorsque la permission est reçue, qui enregistre l'adresse de l'ordinateur dans une liste stockée dans un serveur (12) ;
un troisième module adapté pour exécuter un calcul informatique de procuration, en réponse à une sélection dans la liste d'un appareil de traitement d'informations demandant un calcul informatique de procuration (10a) ;
le deuxième module étant adapté pour transmettre un résultat du calcul informatique de procuration à l'appareil de traitement d'informations demandant un calcul informatique de procuration (10a) ;
le premier module étant en outre adapté pour recevoir une indication de retirer la permission en provenance de l'utilisateur ;
le premier module étant adapté, lorsque l'indication est reçue tout en exécutant le calcul informatique de procuration, pour informer l'appareil de traitement d'informations demandant le calcul informatique de procuration (10a) de l'indication, et pour transmettre les données intermédiaires du calcul informatique de procuration à un autre appareil de traitement d'informations (16b) qui est capable d'exécuter un calcul informatique de procuration et nouvellement sélectionné par l'appareil de traitement d'informations demandant un calcul informatique de procuration (10a), et
un module qui arrête le calcul informatique de procuration, lorsqu'il reçoit un signal de permission de commutation, en provenance de l'appareil de traitement d'informations demandant le calcul informatique de procuration (10a), indiquant que l'autre appareil de traitement d'informations (16b) devient capable de continuer d'exécuter le calcul informatique de procuration, suite à la transmission des données intermédiaires.
